# EUROPÄISCHE PATENTSCHRIFT

(11) **EP 1 615 786 B1**
(45) Veröffentlichungstag und Bekanntmachung des Hinweises auf die Patenterteilung: **30.06.2010**
(21) Anmeldenummer: 04725943.7
(22) Anmeldetag: 06.04.2004
(51) Int. Cl.: B60C 23/06, B60C 23/04

(54) **REIFENDRUCKÜBERWACHUNGSEINRICHTUNG UND VERFAHREN ZUR REIFENDRUCKÜBERWACHUNG**
DEVICE AND METHOD FOR MONITORING TYRE PRESSURES
DISPOSITIF ET PROCEDE DE SURVEILLANCE DE LA PRESSION DE PNEUS

(30) Priorität: 09.04.2003 DE 10316468
(43) Veröffentlichungstag der Anmeldung: 18.01.2006
(73) Patentinhaber: Continental Teves AG & Co. oHG, 60488 Frankfurt am Main (DE)
(72) Erfinder: LAUER, Peter, 61184 Karben (DE); STÖLZL, Stefan, 69469 Weinheim (DE); GRIESSER, Martin, 65760 Eschborn (DE); KÖBE, Andreas, 64625 Bensheim (DE); SÄGER, Peter, 61381 Friedrichrichsdorf (DE); KOUKES, Vladimir, 64297 Darmstadt (DE)
(86) Internationale Anmeldenummer: PCT/EP2004/050453
(87) Internationale Veröffentlichungsnummer: WO 2004/089659

(56) Entgegenhaltungen:
- EP-A- 1 044 829
- DE-A- 10 060 392
- DE-A- 10 105 641
- DE-A- 10 152 590
- ANONYMOUS: "Lower cost method to monitor tire inflation pressure for extended-mobility tires" RESEARCH DISCLOSURE, KENNETH MASON PUBLICATIONS, HAMPSHIRE, GB, Bd. 407, Nr. 26, März 1998 (1998-03), XP007122422 ISSN: 0374-4353

## Beschreibung

Die Erfindung betrifft eine Reifendrucküberwachungseinrichtung und ein Verfahren zur Reifendrucküberwachung gemäß den Oberbegriffen der Ansprüche 1 und 8.

Eine zuverlässige Überwachung des Reifendrucks an allen Rädern eines Kraftfahrzeugs ist für die Sicherheit des Fahrzeuges von großer Bedeutung. Es existieren verschiedene Ansätze, wie die Reifendrucküberwachungssysteme realisiert werden können. Es gibt sogenannte direkt messende Reifendrucküberwachungssysteme, z. B. beschrieben in der Anmeldung DE 199 26 616 C2, welche mittels Drucksensoren in den einzelnen Reifen den jeweiligen Druck in dem zugehörigen Rad ermitteln. Solche Systeme überwachen den Reifendruck an allen Rädern unabhängig, aber sie sind relativ teuer, da sie zusätzliche Einrichtungen, z. B. zur Übertragung und Auswertung der Drucksensorinformationen benötigen. Weiterhin sind sogenannte indirekt messende Reifendrucküberwachungssysteme z. B. aus der DE 100 58 140 A1 bekannt, welche aus Hilfsgrößen, z. B. durch Vergleich der Abrollumfänge der einzelnen Räder, einen Druckverlust ermitteln können.

Nachteilig bei diesen Systemen ist, dass ein defekter Reifen erst bei einem deutlichen Druckverlust erkannt wird. Solche Systeme sind zwar billig und zuverlässig, funktionieren aber nur dann, wenn ein Druckverlust bei einem Reifen erfolgt. Erfolgt ein Druckverlust gleichzeitig bei mehreren Reifen, so wird dies nicht erkannt.

In der Schrift DE 101 52 590 A1 wird ein Reifendrucküberwachungssystem beschrieben, welches an den Rädern wenigstens einer Achse Raddrehzahlsensoren aufweist. Zusätzlich oder alternativ ist ein Reifendruckmesssystem vorgesehen, das den Reifenfülldruck der Räder wenigstens einer Achse misst.

Die gattungsgemäße Schrift EP 1 044 829 A2 offenbart ein Fahrzeug mit einem ersten Reifendruckkontrollsystem, welches auf jedem Rad den Luftdruck mittels einer Reifendruckkontrollvorrichtung misst, und einem weiteren Reifendruckkontrollsystem, welches unabhängig von dem ersten arbeitet und den Luftdruck in den Reifen dann überwacht, wenn im ersten System eine Fahrfunktion vorliegt.

Aus der DE 100 60 392 A1 ist bereits eine Reifendrucküberwachungscinrichtung bekannt, welche aus einer Kombination von einem indirekt messenden Reifendrucküberwachungssystem mit einem direkt messenden Reifendrucküberwachungssystem besteht. Die in dieser Schrift beschriebene Reifendrucküberwachungseinrichtung soll durch die Kombination eines Reifendrucksensors mit dem indirekt messenden Reifendrucküberwachungssystem einen Luftdruckverlust an allen vier Rädern erkennen können.

Nachteilig hierbei ist, das bei Verwendung nur eines Reifendrucksensors die Räder, an denen keine Reifendrucksensoren montiert sind, nur mit relativ großen Erkennungsschwellen überwacht werden können. Hierdurch wird ein Luftdruckverlust erst sehr spät bemerkt. Durch die in der Schrift genannte alternative Verwendung von zwei Reifendrucksensoren, wobei an jeder Fahrzeugachse genau ein Reifendrucksensor angeordnet ist, wird erreicht, dass für jede Achse individuelle Reifendrucksollwerte ermittelt werden können. Diese Maßnahme führt aber nicht zu einer wesentlich früheren Erkennung eines Luftdruckverlustes. Da ein indirekt messendes Reifendrucküberwachungssystem auf Basis der Raddrehzahlen arbeitet, und damit direkt abhängig von dem Radabrollumfang ist, kann ein Druckverlust an den angetriebenen Rädern häufig nur sehr schlecht oder in seltenen Momenten des Freirollens erkannt werden.

Bei Verwendung eines Reifendrucksensors an nur einem Rad der angetriebenen Achse können an dem anderen angetriebenen Rad weiterhin nur sehr große Druckverluste erkannt werden. Außerdem bleibt die Problematik, dass Radschlupf an einem angetriebenen Rad durch das indirekt messende Reifendrucküberwächungssystem als Druckverlust an diesem Rad interpretiert werden könnte, da das indirekt messende Reifendrucküberwachungssystem nicht erkennt, ob die Raddrehzahlerhöhung von einem defekten Reifen oder von einer Schlupfsituation herrührt. Es können deshalb aus Gründen der Robustheit bei einem solchen Reifendrucküberwachungssystem nur große Erkennungsschwellen zur Druckverlusterkennung verwendes werden,

Die Aufgabe der vorliegenden Erfindung besteht nun darin, eine Reifendrucküberwachungseinrichtung und ein Verfahren zur Reifendrucküberwachung bereitzustellen, welche bzw. welches auf zuverlässige und kostengünstige Weise einen Druckverlust an mehreren, bzw, allen, Reifen eines Kraftfahrzeugs frühzeitig, unter Berücksichtigung des Radschlupfs und mit hoher Genauigkeit sicher erkennt.

Diese Aufgabe wird durch eine Reifendrucküberwachingseinrichtung gemäß Anspruch 1 und ein Verfahren zur Reifendrucküberwachung gemäß Anspruch 8 gelöst.

Hierdurch wird auch ein Druckverlust an der angetriebenen Achse erkannt, wenn die Antriebsräder einem Antriebsmoment bzw. Radschlupf, z. B. bei Beschleunigung des Fahrzeugs, ausgesetzt werden. Da das Antriebsmoment nur an der angetriebenen Achse anliegt, können die nichtangetriebenen Räder sicher durch ein indirekt messendes Reifendruckübarwachungssystem überwacht werden.

Es ist außerdem bevorzugt, dass die drahtlose Übermittlung der Reifendruckwerte durch eine Funkübertragung mittels Funksender und Funkempfänger oder durch eine optische übertragung mittels Sendediode und Empfangsdiode erfolge. Es ist weiterhin bevorzugt, dass zwischen dem Funkempfänger bzw. der Empfangsdiode und der Auswerteeinheit eine drahtgebundene Übertragungsstrecke zur Übertragung der Reifendruckwerte besteht.

Die zentrale Empfangsantenne ist vorzugsweise so am Fahrzeug angeordnet, dass eine Zuordnung der einzelnen Sendereinrichtungen zu den betreffenden Fahrzeugrädern über die Feldstärke bzw. die Intensität des gesendeten Signals erfolgt.

In einer bevorzugten Ausführungsform der erfindungsgemäßen Reifendrucküberwachungseinrichtung weist das indirekt messende Reifendrucküberwachungssystem zusätzlich zu den Raddrehzahlsensoren an der nichtangetriebenen Fahrzeugachse noch einen weiteren Raddrehzahlsensor an der angetriebenen Fahrzeugachse oder an einem Rad der angetriebenen Achse auf. In einer besonders bevorzugten Ausführungsform weisen alle Fahrzeugräder Raddrehzahlsensoren auf.

Erfindungsgemäß kann an der nichtangetriebenen Fahrzeugachse eine zusätzliche Reifendruckmesseinrichtung angeordnet sein.

Es ist bevorzugt zusätzlich zu dem indirekt bzw. direkt messenden Reifendrucküberwachungssystem einen Fahrdynamiksensor, welcher Informationen über die Gierrate und/oder die Querbeschleunigung des Fahrzeugs liefert, an die Auswerteeinheit anzubinden, wodurch Kurvenfahrten sicher und schnell erkannt werden. Dies führt zu einer genaueren und schnelleren Druckverlusterkennung bei dem indirekt messenden Reifendrucküberwachungssystem.

Der Lernmodus wird bevorzugt durch die Betätigung einer Rücksetztaste, beispielsweise bei einem Reifenwechsel, gestartet. Die Betätigung der Rücksetztaste erfolgt hierbei durch den Fahrzeugführer oder einen Mechaniker.

Die Erfindung betrifft außerdem ein Computerprogrammprodukt, welches das erfindungsgemäße Verfahren umfasst.

weitere Merkmale der Erfindung ergeben sich aus den Unteransprüchen und der nachfolgenden Beschreibung anhand von fünf Ausführungsbeispielen.

Die erfindungsgemäße Reifendrucküberwachungseinrichtung sieht in einem ernsten Ausführungsbeispiel zwei Reifendrucksensoren, jeweils einer pro Rad, an der angetriebenen Achse vor. Die nicht angetriebene Achse wird über Raddrehzahlsensoren, welche z. B. in einem Fahrzeug mit einem Anti-Blockier-System (ABS) bereits vorhanden sind, überwacht. Diese Anordnung bietet den Vorteil, dass ein Druckverlust an einem angetriebene Rad sicher erkannt wird. Durch das Antreiben eines Rades (z. B. bei einer Fahrzeugbeschleunigung) ist der Effekt, welcher bei dem indirekt messenden Reifendrucküberwachungssystem ausgenutzt wird, häufig so gering, dass ein Druckverlust nur durch ein direkt messendes Reifendrucküberwachungssystem sicher erkannt werden kann. Bei der nichtangetriebenen Achse reicht hingegen ein indirekt messendes Reifendrucküberwachungssystem aus um einen Druckverlust sicher zu erkennen. Jeder Reifendrucksensor verfügt über eine Sende- und eine am Fahrzeug angebrachte Empfangseinheit, welche Informationen über den Druckwert des Reifens an eine Auswerteeinheit liefert. Hierdurch ist eine Positionserkennung, d. h. Zuordnung der einzelnen Räder zu ihren Montageorten (Rad vorne links, Rad vorne rechts, etc.), möglich. Der Einfluss von unterschiedlichen Reibwerten µ, zwischen Reifen und Fahrbahn, wirkt sich nur auf die Antriebsräder aus, da hier durch das an einem Antriebsrad anliegende Drehmoment eine Drehzahldifferenz zwischen einem Rad auf einem hohen Reibwert µ_{hoch} und einem Rad mit einem niedrigen Reibwert µ_{niedrig} besteht. Deshalb kann die beschriebene Reifendrucküberwachungseinrichtung auch bei sogenannten µ-Split-Bedingungen (die Räder der angetriebenen Achse befinden sich auf unterschiedlichen Reibwerten) einen geringen Druckverlust sicher und schnell erkennen. Unter den unterschiedlichen Reibwerten kann man z. B. einen hohen Reibwert µ_{hoch} auf trockenem Asphalt und einen niedrigen Reibwert µ_{niedrig} auf einer vereisten Fahrbahn verstehen. Die nichtangetriebenen Räder hingegen unterliegen hinsichtlich ihres Drehverhaltens keiner Abhängigkeit von den Reibwerten. Hierdurch werden mit relativ geringen Erkennungsschwellen, im Gegensatz zu den relativ hohen Erkennungsschwellen bei einem herkömmlichen indirekten Reifendrucküberwachungssystem nach dem Stand der Technik, schon geringe Reifendruckverluste sicher und schnell erkannt.

In einer zweiten Ausführungsform wird im Gegensatz zu der ersten Ausführungsform eine zentrale Empfangseinheit für alle Sendeeinheiten der Reifendrucksensoren verwendet. Auch hierdurch ist eine Positionserkennung möglich, wenn die Empfangseinheit so angeordnet wird, z. B. durch eine räumlich nähere Anordnung zu einer Sendeeinheit, dass über die unterschiedlichen Feldstärken der Sendeeinheiten eine Zuordnung der Räder zu ihren Montageorten erfolgt.

In einer dritten Ausführungsform wird zusätzlich an der Antriebsachse ein weiterer Raddrehzahlsensor an einem Rad der angetriebenen Achse oder direkt an der angetriebenen Achse, z. B. am Differential, verwendet. Hierdurch wird ein gleichzeitiger Druckverlust an beiden Rädern der nichtangetriebenen Achse, bzw. ein gleichzeitiger Druckverlust an allen Rädern, erkannt. Durch eine Verwendung der in der ersten und zweiten Ausführungsform beschriebenen Anordnung der Empfangseinheit bzw. der Empfangseinheiten, ist auch hier eine Positionserkennung möglich.

In einer vierten Ausführungsform wird die beschriebene erste Ausführungsform dahingehend ergänzt, dass an allen Rädern Raddrehzahlsensoren eingesetzt werden. Auch hier ist durch die Verwendung der in der ersten und zweiten Ausführungsform beschriebenen Anordnung der Empfangseinheit bzw. der Empfangseinheiten, eine Positionserkennung möglich. Weiterhin bietet diese Ausführungsform den Vorteil, dass auch bei Ausfall des direkt messenden Reifendrucküberwachungssystems durch das indirekt messende Reifendrucküberwachungssystem eine Rückfallebene vorhanden ist, welche einen Druckverlust an den einzelnen Reifen erkennt.

In einer fünften Ausführungsform wird zusätzlich zu der ersten Ausführungsform an der nichtangetriebenen Achse ein Reifendrucksensor an einem Rad eingesetzt. Hierdurch wird ein Druckverlust schneller erkannt.

Durch die Verwendung von Fahrdynamiksensoren, wie z. R. Gierratensensor oder Querbeschleunigungssensor, werden die genannten Ausführungsformen weiterhin verbessert, da z. B. eine Kurvenfahrt durch die Fahrdynamiksensoren sicher erkannt wird, so dass die Überwachungszeiten des indirekt messenden Reifendrucküberwachungssystems verkürzt werden.

Im Folgenden werden die Verfahren zur Reifendrucküberwachung anhand der obigen Ausführungsbeispiele erläutert. Als Ausgangsbasis wird ein Fahrzeug mit einer angetriebenen Vorderachse betrachtet, wobei das erfindungsgemäße Verfahren nicht auf Fahrzeuge mit einer angetriebenen Vorderachse beschränkt ist. Die Räder VL (vorne links) und VR (vorne rechts) werden durch Raddrucksensoren direkt überwacht. Die Räder HL (hinten links) und HR (hinten rechts) werden durch Raddrehzahlsensoren überwacht. Die Raddrehzahlsensoren messen die Radgeschwindigkeiten der einzelnen Räder HL und HR, wobei sich die Radgeschwindigkeiten aus den Radabrollumfängen und den Radumlaufzeiten T für eine Radumdrehung zusammensetzen. Jedes Rad HL und HR weist eine individuelle Radumlaufzeit (T_{HL}, T_{HR}) auf.

Gemäß dem ersten Ausführungsbeispiel lernt das indirekt messende Reifendrucküberwachungssystem, nach Betätigen einer Rücksetztaste, auf Basis der beiden Raddrehzahlsensoren an der nichtangetriebenen Achse einen Referenzwert X1_{ref} ein. Dieser Referenzwert X1_{ref} basiert im wesentlichen auf einer Differenz zwischen den beiden Radumlaufzeiten T_{HL} und T_{HR} der betrachteten Räder HL und HR, wobei die Differenz durch die Summe der beiden Radumlaufzeiten T_{HL} und T_{HR} dividiert wird. Der Referenzwert X1_{ref} wird unter Berücksichtigung verschiedener Fahrzeuggeschwindigkeiten und unter Berücksichtigung von Kurvenfahren ermittelt. Nach Abschluss dieser Lernphase wird, gemäß der oben beschriebenen Methode, laufend ein aktueller Vergleichswert X1ₐₖₜᵤₑₗₗ aus denselben Radumlaufzeiten T_{HL} und T_{HR} ermittelt. Aus dem Vergleichswert X1ₐₖₜᵤₑₗₗ und dem Referenzwert X1_{ref} wird eine Differenz gebildet. Diese Differenz wird mit einem zuvor aus dem Referenzwert X1_{ref} bestimmten Schwellwert S bzw. einem Schwellwert -S verglichen. Ist diese Differenz größer als der Schwellwert S, bzw. kleiner als der Schwellwert -S, so kann ein Druckverlust an einem der Räder HL und HR genau dem betreffenden Rad HL oder HR zugeordnet werden. Wichtig hierbei ist, dass die Differenz aus dem Vergleichswert X1ₐₖₜᵤₑₗₗ und dem Referenzwert X1_{ref} nur in derselben Fahrsituation, z. B. bei derselben Fahrzeuggeschwindigkeit und einer erkannten Geradeausfahrt, gebildet wird. Bei Fahrzeugen die mit einem elektronischen Stabilitätsprogramm (ESP) ausgestattet sind, können einfach die Daten eines Gierraten- oder Querbeschleunigungssensors ausgewertet werden, um eine Information über eine Kurvenfahrt zu gewinnen.

Durch einen zusätzlichen Raddrehzahlsensor, z. B. an dem Rad VL der angetriebenen Achse, gemäß dem dritten Ausführungsbeispiel lernt das indirekt messende Reifendrucküberwachungssystem verschiedene Referenzwerte X1_{ref} und X2_{ref} ein. Der Referenzwert X1_{ref} wird wie im vorherigen Ausführungsbeispiel ermittelt. Der Referenzwert X2_{ref} setzt sich im wesentlichen aus der Differenz der beiden Radumlaufzeiten T_{HL} und T_{VL} zusammen, wobei die Differenz durch die Summe der Radumlaufzeiten T_{HL} und T_{VL} dividiert wird. Der Referenzwert X2_{ref} wird wie der Referenzwert X1_{ref} in verschiedenen Fahrsituationen gelernt. Es ist hierbei egal an welchem Rad der angetriebenen Achse der zusätzliche Raddrehzahlsensor angeordnet ist. Der Raddrehzahlsensor kann auch an dem Differential der angetriebenen Achse angeordnet sein. Durch diesen zusätzlichen Raddrehzahlsensor wird ein schleichender Druckverlust an der nichtangetriebenen Achse erkannt. Die Überwachung der nichtangetriebenen Achse erfolgt analog zum ersten Ausführungsbeispiel. Erst wenn ein Reifendrucksensor an der angetriebenen Achse eine Druckdifferenz feststellt, wird ein aktueller Vergleichswert X2ₐₖₜᵤₑₗₗ, entsprechend wie der Referenzwert X2_{ref} unter Beachtung derselben Fahrsituationen, gebildet. Aus dem aktuellen Vergleichswert X2ₐₖₜᵤₑₗₗ und dem Referenzwert X2_{ref} wird eine Differenz gebildet. Diese Differenz wird mit einem vorher festgelegten Schwellwert S1 verglichen. Ist diese Differenz kleiner als der Schwellwert S1, so liegt ein schleichender Druckverlust an beiden Rädern der nichtangetriebenen Achse vor.

Gemäß dem vierten Ausführungsbeispiel liegt ein vollständiges indirektes Reifendrucküberwachungssystem, wie oben beschrieben, vor. Hierdurch wird die Ausfallsicherheit des Systems weiter erhöht, da bei Ausfall eines oder mehrerer Raddrehzahlsensoren ein System gemäß einem der vorgenannten Ausführungsbeispiele vorliegt. Die nichtangetriebene Achse wird hierbei wie im ersten Ausführungsbeispiel überwacht. Die angetriebene Achse wird analog zur nichtangetriebenen Achse überwacht. Zusätzlich kann durch die im dritten Ausführungsbeispiel beschriebene Methode ein schleichender Druckverlust an einer Fahrzeugachse detektiert werden.

Die anderen Ausführungsbeispiele sind hier nicht näher beschrieben, da durch die zusätzliche Verwendung von einem direkt messenden Reifendrucksensor eine offensichtliche Genauigkeitsverbesserung vorlegt, da unmittelbar der Reifendruckwert vorhanden ist. Durch die zusätzliche Verwendung von weiteren Fahrdynamiksensoren, wie weiter oben beschrieben, werden die genannten Ausführungsbeispiele hinsichtlich kürzerer Überwachungszeiten bzw. Kurvenfahrterkennung deutlich verbessert.

## Patentansprüche

1. Reifendrucküberwachungseinrichtung für ein zweiachsiges Kraftfahrzeug mit einer angetriebenen und einer nichtangetriebenen Fahrzeugachse, welche ein direkt messendes Reifendrucküberwachungssystem mit einer Übertragungseinrichtung zu Übermittlung von mittels Drucksensoren ermittelten Reifendruckwerten und ein indirekt messendes Reifendrucküberwachungssystem, welches auf Basis von Raddrehzahlsensoren arbeitet, beinhaltet, **dadurch gekennzeichnet, dass** das direkt messende Reifendrucküberwachungssystem nur an jedem Rad der angetriebenen Fahrzeugachse und an höchstens einem Rad der nichtangetriebenen Achse eine Reifendruckmesseinrichtung zur Erfassung eines Reifendruckwertes aufweist, und dass das indirekt messende Reifendrucküberwachungssystem, insbesondere ausschließlich, Raddrehzahlsensoren an der nichtangetriebenen Fahrzeugachse aufweist.

2. Reifendrucküberwachungseinrichtung nach Anspruch 1, **dadurch gekennzeichnet, dass** die Übertragungseinheit eine Sende- und Empfangseinheit, welche eine drahtlose Übermittlung der Reifendruckwerte ermöglicht, beinhalte.

3. Reifendrucküberwachungseinrichtung nach Anspruch 2, **dadurch gekennzeichnet, dass** allen Sendeeinheiten der einzelnen Reifendruckmesseinrichtungen eine einzige zentrale Empfangsantenne, welche mit der Empfangseinheit verbunden ist, zugeordnet ist.

4. Reifendrucküberwachungseinrichtung nach Anspruch 2, **dadurch gekennzeichnet, dass** jeder Sendeinheit einer Reifendruckmesseinrichtung eine Empfangsantenne, welche in unmittelbarer Nähe der jeweiligen Sendeeinheit angeordnet ist, zugeordnet ist, wobei die einzelnen Antennen mit der Empfangseinheit verbunden sind.

5. Reifendrucküberwachungseinrichtung nach mindestens einem der Ansprüche 1 bis 4, **dadurch gekennzeichnet, dass** das indirekte Reifendrucküberwachungssystem zusätzlich einen weiteren Raddrehzahlsensor an der angetriebenen Achse oder an einem Rad der angetriebenen Achse aufweist.

6. Reifendrucküberwachungseinrichtung nach mindestens einem der Ansprüche 1 bis 4, **dadurch gekennzeichnet, dass** das indirekte Reifendrucküberwachungssystem an allen Fahrzeugrädern Raddrehzahlsensoren aufweist.

7. Reifendrucküberwachungseinheit nach mindestens einem der Ansprüche 1 bis 6, **dadurch gekennzeichnet, dass** die Auswerteeinheit Informationen über die Gierrate und/oder die Querbeschleunigung des Fahrzeugs von mindestens einem zusätzlichen Fahrdynamiksensor erhält.

8. Verfahren zur Reifendrucküberwachung für ein zweiachsiges Kraftfahrzeug mit einer angetriebenen und einer nichtangetriebenen Fahrzeugachse, insbesondere für eine Reifendrucküberwachungseinrichtung gemäß mindestens einem der Ansprüche 1 bis 7, **gekennzeichnet durch** die Verfahrensschritte
- Ermittlung der Reifendruckwerte nur an jeden Rad der angetriebenen Fahrzeugachse und an höchsters einem Rad der nichtangetriebenen Achse,
- Starten eines Lernmodus zur Ermittlung von Referenzwerten aus den Raddrehzahlwerten des indirekt messenden Reifendrucküberwachungssystems,
- Bestimmung von Schwellwerten für einen Reifendruckverlust aus den ermittelten Referenzwerten,
- Ermittlung von aktuellen Vergleichswerten aus den Raddrehzahlwerten des indirekt messenden Reifendrucküberwachungssystems und
- Auswerten der Differenz zwischen dem aktuel gemessenen Vergleichswert und dem Referenzwert und der Reifendruckwerte unter Berücksichtigung der Erkennungsschwellen im Hinblick auf einen Reifendruckverlust.

9. Verfahren zur Reifendrucküberwachung nach Anspruch 8, **dadurch gekennzeichnet, dass** das indirekt messende Reifendrucküberwachungssystem zur Ermittlung der Reifendruckwerte oder entsprechender Kenngrößen lediglich Raddrehzahlinformationen der nichtangetriebenen Räder verarbeitet.

10. Verfahren zur Reifendrucküberwachung nach Anspruch 8 oder 9, **dadurch gekennzeichnet, dass** die aktuellen Vergleichswerte und vorzugsweise auch die Referenzwerte einen Quotienten umfassen, wobei dessen Zähler zumindest aus der Differenz oder der Summe zweier, die Raddrehzahl beschreibender, Kennwerte der nichtangetriebenen Achse gebildet wird, und wobei der Nenner zumindest aus einer Normierungsgröße gebildet wird, welche vorzugsweise mit
a) Kennwerten der nichtangetriebenen Achse bestimmt wird und/oder
b) einem Kennwert der angetriebenen Achse bestimmt wird.

11. Verfahren zur Reifendrucküberwachung nach mindestens einem der Ansprüche 8 bis 10, **dadurch gekennzeichet, dass** der Lernmodus durch Betätigung einer Rücksetztaste gestartet wird.

## Claims

1. Device for monitoring tyre pressures for a two-axle motor vehicle having a driven vehicle axle and a non-driven vehicle axle, which device for monitoring tyre pressures includes a directly measuring system for monitoring tyre pressures with a transmission device for transferring tyre pressure values, determined by means of pressure sensors, and an indirectly measuring system for monitoring tyre pressures which operates on the basis of wheel speed sensors, **characterized in that** the directly measuring system for monitoring tyre pressures has a device for measuring tyre pressures in order to acquire a tyre pressure value only at each wheel of the driven vehicle axle and at at most one wheel of the non-driven axle, and **in that** the indirectly measuring system for monitoring tyre pressures has, in particular exclusively, wheel speed sensors on the non-driven vehicle axle.

2. Device for monitoring tyre pressures according to Claim 1, **characterized in that** the transmission unit includes a transceiver unit which permits wireless transfer of the tyre pressure values.

3. Device for monitoring tyre pressures according to Claim 2, **characterized in that** a single central reception antenna, which is connected to the reception unit, is assigned to all the transmission units of the individual devices for measuring tyre pressures.

4. Device for monitoring tyre pressures according to Claim 2, **characterized in that** each transmission unit of a device for measuring tyre pressures is assigned a reception antenna which is arranged in the direct vicinity of the respective transmission unit, wherein the individual antennas are connected to the reception unit.

5. Device for monitoring tyre pressures according to at least one of Claims 1 to 4, **characterized in that** the indirect system for monitoring tyre pressures additionally has a further wheel speed sensor at the driven axle or at one wheel of the driven axle.

6. Device for monitoring tyre pressures according to at least one of Claims 1 to 4, **characterized in that** the indirect system for monitoring tyre pressures has wheel speed sensors on all the vehicle wheels.

7. Device for monitoring tyre pressures according to at least one of Claims 1 to 6, **characterized in that** the evaluation unit receives information about the yaw rate and/or the lateral acceleration of the vehicle from at least one additional vehicle movement dynamics sensor.

8. Method for monitoring tyre pressures for a two-axle motor vehicle having a driven vehicle axle and a non-driven vehicle axle, in particular for a device for monitoring tyre pressures according to at least one of Claims 1 to 7, **characterized by** the method steps:
- determination of the tyre pressure values only at each wheel of the driven vehicle axle and at at most one wheel of the non-driven axle,
- starting of a learning mode for determining reference values from the wheel speed values of the indirectly measuring system for monitoring tyre pressures,
- specification of threshold values for a tyre pressure loss from the reference values which are determined,
- determining of current comparison values from the wheel speed values of the indirectly measuring system for monitoring tyre pressures, and
- evaluation of the difference between the currently measured comparison value and the reference value and of the tyre pressure values taking into account the detection thresholds with respect to a tyre pressure loss.

9. Method for monitoring tyre pressures according to Claim 8, **characterized in that** the indirectly measuring system for monitoring tyre pressures processes only wheel speed information of the non-driven wheels in order to determine the tyre pressure values or corresponding characteristic variables.

10. Method for monitoring tyre pressures according to Claim 8 or 9, **characterized in that** the current comparison values and, preferably, also the reference values comprise a quotient, wherein the numerator of said quotient is formed at least from the difference between or the sum of two characteristic values of the non-driven axle which describe the wheel speed, and wherein the denominator is formed at least from a standardization variable which is preferably determined with
a) characteristic values of the non-driven axle, and/or
b) is determined with a characteristic value of the driven axle.

11. Method for monitoring tyre pressures according to at least one of Claims 8 to 10, **characterized in that** the learning mode is started by activation of a resetting key.

## Revendications

1. Dispositif de surveillance de la pression de bandage de roue pour un véhicule à deux essieux présentant un essieu moteur et un essieu non moteur de véhicule, et qui comprend
un système de surveillance de la pression des bandages de roue à mesure directe doté d'un dispositif de transfert qui transmet les valeurs de pression de bandage de roue déterminées au moyen de détecteurs de pression et
un système de surveillance de pression de bandage de roue à mesure indirecte qui travaille sur base de détecteurs de vitesse de rotation des roues, **caractérisé en ce que**
le système de surveillance de la pression des bandes de roues à mesure directe présente uniquement sur chaque roue de l'essieu moteur du véhicule et sur au plus une roue de l'essieu non moteur un dispositif de mesure de la pression de bandage de roue qui détermine une valeur de la pression des bandages de roue et
**en ce que** le système de surveillance de pression des bandages de roue à mesure indirecte présente en particulier exclusivement des détecteurs de vitesse de rotation de roue sur l'essieu non moteur du véhicule.

2. Dispositif de surveillance de la pression de bandage de roue selon la revendication 1, **caractérisé en ce que** l'unité de transmission contient une unité d'émission et une unité de réception qui permettent de transmettre sans fil les valeurs de pression des bandages.

3. Dispositif de surveillance de la pression de bandage de roue selon la revendication 2, **caractérisé en ce qu'**une unique antenne centrale de réception reliée à l'unité de réception est associée à toutes les unités d'émission des différents dispositifs de mesure de pression des bandages de roue.

4. Dispositif de surveillance de la pression de bandage de roue selon la revendication 2, **caractérisé en ce qu'**une antenne de réception disposée à proximité immédiate de chaque unité d'émission est associée à chaque unité d'émission du dispositif de mesure de pression de bandage de roue, les différentes antennes étant reliés à l'unité de réception.

5. Dispositif de surveillance de la pression de bandage de roue selon au moins l'une des revendications 1 à 4, **caractérisé en ce que** le système de surveillance indirecte de pression des bandages de roue présente de plus un autre détecteur de vitesse de rotation de roue sur l'essieu moteur ou sur une roue de l'essieu moteur.

6. Dispositif de surveillance de la pression de bandage de roue selon au moins l'une des revendications 1 à 4, **caractérisé en ce que** le système de surveillance indirecte de la pression des bandages de roue présente des détecteurs de vitesse de rotation de roue sur toutes les roues du véhicule.

7. Dispositif de surveillance de la pression de bandage de roue selon au moins l'une des revendications 1 à 6, **caractérisée en ce que** l'unité d'évaluation reçoit des informations sur la vitesse de lacet et/ou sur l'accélération transversale du véhicule d'au moins un détecteur supplémentaire de dynamique de roulage.

8. Procédé de surveillance de la pression de bandage de roue d'un véhicule automobile à deux essieux qui présente un essieu moteur et un essieu non moteur de véhicule, en particulier pour un dispositif de surveillance de la pression de bandage de roue selon au moins l'une des revendications 1 à 7, **caractérisé par** les étapes qui consistent à :
- déterminer les valeurs de pression de bandage de roue uniquement sur chaque roue de l'essieu entraîné du véhicule et sur au plus une roue de l'essieu non entraîné,
- lancer un mode d'apprentissage en vue de déterminer des valeurs de vitesse de rotation des roues du système de surveillance de pression de bandage de roue à mesure indirecte,
- déterminer des valeurs de seuil d'une perte de pression de bandage de roue à partir des valeurs de référence ainsi déterminées,
- déterminer des valeurs instantanées de comparaison à partir des valeurs de vitesse de rotation des roues du système de surveillance de pression de bandage de roue à mesure indirecte et
- évaluer la différence entre la valeur de comparaison instantanée mesurée et la valeur de référence et les valeurs de pression de bandage de roue en tenant compte des seuils de détection en vue de déterminer une éventuelle perte de pression d'un bandage de roue.

9. Procédé de surveillance de pression de bandage de roue selon la revendication 8, **caractérisé en ce que** le système de surveillance de pression de bandage de roue à mesure indirecte traite uniquement des informations de vitesse de rotation des roues non motrices pour déterminer les valeurs de pression de bandage de roue ou des grandeurs caractéristiques correspondantes.

10. Procédé de surveillance de pression de bandage de roue selon les revendications 8 ou 9, **caractérisé en ce que** les valeurs instantanées de comparaison et de préférence également les valeurs de référence comprennent un quotient dont le numérateur est formé au moins de la différence ou de la somme de deux valeurs caractéristiques qui décrivent la vitesse de rotation des roues de l'essieu non moteur et dont le dénominateur est formé d'au moins une grandeur de normalisation qui est déterminée de préférence à l'aide
a) des valeurs caractéristiques de l'essieu non moteur et/ou
b) d'une valeur caractéristique de l'essieu moteur.

11. Procédé de surveillance de la pression de bandage de roue selon au moins l'une des revendications 8 à 10, **caractérisé en ce que** le mode d'apprentissage est lancé par actionnement d'une touche de réinitialisation.
